Europäisches Patentamt

European Patent Office

Office européen des brevets

(11) Veröffentlichungsnummer: **0 358 024**
**A1**

## (12) EUROPÄISCHE PATENTANMELDUNG

(21) Anmeldenummer: 89115348.8

(22) Anmeldetag: 19.08.89

(51) Int. Cl.⁵: **A01D 34/10**

(30) Priorität: 03.09.88 DE 8811159 U

(43) Veröffentlichungstag der Anmeldung:
**14.03.90 Patentblatt 90/11**

(84) Benannte Vertragsstaaten:
**BE DE ES FR GB IT SE**

(71) Anmelder: **AL-KO KOBER AG**
**Ichenhauser Strasse 14**
**D-8871 Kötz 2(DE)**

(72) Erfinder: **Wöhrle, Rudolf**
**Kirchstrasse 2**
**D-8873-Ichenhausen-Rieden(DE)**
Erfinder: **Lechler, Richard**
**Fichtenweg 10**
**D-8871-Kötz 2(DE)**
Erfinder: **Eberle, Anton**
**Bgm.-Weiss-Str. 8**
**D-8873-Ichenhausen-Hochwang(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**D-8900 Augsburg(DE)**

(54) **Rasenmäher.**

(57) Die Erfindung betrifft einen Rasenmäher (1) mit motorischem Antrieb, der asymmetrisch ausgebildet ist. Die Bedienungselemente (2) der Start-, Einstell- und Anbauvorrichtungen sind in Fahrtrichtung (20) gesehen auf der rechten Seite des Rasenmähers (1) angeordnet. Auf dieser Seite weist auch der Füh- rungsholm (3) eine Aussparung (18) auf. Das Mäh- werkzeug (23) ist gegenüber dem Fahrwerk des Rasenmähers (1) in Fahrtrichtung (20) nach links ver- setzt und reicht bis midestens auf die Höhe der Außenkante des linken Vorderrades (7).

EP 0 358 024 A1

# Rasenmäher

Die Erfindung betrifft einen Rasenmäher mit den Merkmalen im Oberbegriff des Hauptanspruchs.

Vorbekannte Rasenmäher sind bezogen auf die Längsachse bzw. Fahrtrichtung symmetrisch aufgebaut. Insbesondere die Bedienungselemente für den Handstarter, die Radhöhenverstellung oder Anbauvorrichtungen, wie beispielsweise die Arretierugng der angesetzten Grasfangbox, sind mittig angeordnet. Dies bringt Nachteile in der Bedienungsfreundlichkeit und der Unfallsicherheit mit sich.

Es ist daher Aufgabe der Erfindung, größere Bedienungsfreundlichkeit und Unfallsicherheit aufzuzeigen.

Die Erfindung löst diese Aufgabe in den Merkmalen im Kennzeichenteil des Hauptanspruches.
Die Bedienungselemente sind nunmehr einseitig und zwar auf der in Fahrtrichtung rechten Seite des Rasenmähers angeordnet. Dementsprechend ist in diesem Bereich auch der Führungsholm ausgespart, damit die Bedienelemente leichter zugänglich sind. In ergonomisch günstiger Weise kann damit der Rasenmäher sowohl von hinten über den Führungsholm hinweg als auch von der rechten Seite bedient werden. Die erfindungsgemäße Bauweise kommt auch einer Einhand-Bedienung entgegen.

Im Gegensatz zu vorbekannten Rasenmähern ist beim Erfindungsgegenstand der Führungsholm durch seine Aussparung nicht mehr im Wege, so daß beispielsweise auch die Grasfangbox abgenommen und angesetzt werden kann, ohne daß die Bedienungsperson die Hand wechseln und umgreifen muß. Durch die Verlagerung der Bedienungselemente auf die rechte Seite braucht die Bedienungsperson auch nicht mehr in den Gefahrenbereich des Rasenmähers, insbesondere in die Nähe des Mähwerkzeuges, zu treten. Der Zwang zur Bedienung von hinten oder von der rechten Seite verringert damit die Unfallgefahr.

Der asymmetrische Aufbau des Rasenmähers beinhaltet auch eine Verlagerung des Mähwerkzeuges gegenüber dem Fahrwerk des Rasenmähers in Fahrtrichtung nach links. Durch die Anordnung der Bedienungselemente auf der gegenüberliegenden Seite ist dies ohne Einbuße an Unfallsicherheit möglich. Zugleich ergibt sich auf der rechten Bedienungsseite ein Sicherheitsgewinn, da der Abstand vom Gehäuserand zum Mähwerkzeug vergrößert ist. Die Verlagerung des Mähwerkzeuges erlaubt außerdem ein optimales Kantenmähen auf der linken Seite. Der erfindungsgemäße Rasenmäher wird damit von rechts bedient und mäht auf der linken Seite.

In den Unteransprüchen sind vorteilhafte Ausgestaltungen der Erfindung angegeben.

Der U-förmige und seitlich verjüngte Führungsholm ist trotz der Aussparung stabil und überträgt die Handkräfte optimal auf das Fahrwerk des Rasenmähers. Alternativ könnte der Führungsholm auch T-förmig mit einem zentralen Arm ausgebildet sein.

Der erfindungsgemäße Rasenmäher kann hinsichtlich der Anbauteile und der Verstellmöglichkeiten unterschiedlich gestaltet sein, wobei jedoch die jeweiligen Bedienungselemente stets rechts angeordnet sind. Bei der Grasfangbox ist neben dem Verriegelungsgriff auch das Sichtfenster rechts angeordnet und wird von dieser Seite eingesehen. Hierbei ergibt sich der zusätzliche Effekt, daß das Sichtfenster über dem Auswurfkanal liegt und die optimale Füllmenge anzeigt. Durch den asymmetrischen Aufbau des Rasenmähers ist auch die Grasfangbox gegenüber dem Fahrwerk nach links versetzt angeordnet. Außer der Bedienungserleichterung verbessert diese Anordnung auch den Füllgrad der Box und erlaubt eine optimale Ausbildung des Auswurfkanales, der tangential an der rechten Boxwand mündet.

Der erfindungsgemäße Führungsholm ermöglicht eine ergonomisch günstigere Anordnung und Bedienung des Handstarters, dessen Zugkabel und Handgriff längs des Holmarmes verlegt sind. Der Handstarter kann damit von hinten und mit ausreichendem Abstand zum Mähwerkzeug betätigt werden.
Sofern der Rasenmäher auch einen Fußstarter aufweist, kann dessen Pedal an der rechten Sicherheitsseite in die Tretstellung abgeklappt und ohne Behinderung durch andere Mäherteile betätigt werden.

Wenn der Rasemäher Anzeigen aufweist, beispielsweise für die Radhöhenverstellung oder die Rotation der Messerwelle, sind diese ebenfalls auf der rechten Seite angeordnet.

Um die vorgesehene rechtsseitige Bedienung noch sicherer zu machen, ist auf der rechten Seite des Mähergehäuses eine vom Mähwerkzeug distanzierte Außenwand vorgesehen. In Verbindung mit dem nach links versetzten Mähwerkzeug wird hierdurch ein größerer Sicherheitsabstand geschaffen, so daß die Bedienungsperson mit dem Fuß nicht mehr in den Mähbereich kommen kann. Hinter der Gehäusewand läßt sich auch das Zugmittel der Radhöhenverstellung auf elegante Weise unterbringen, ohne daß das Mähwerkzeug gestört wird, oder lästige Auf- und Anbauten am Mähergehäuse erforderlich sind.

Die Erfindung ist in den Zeichnungen beispielsweise und schematisch dargestellt. Im einzelnen zeigen

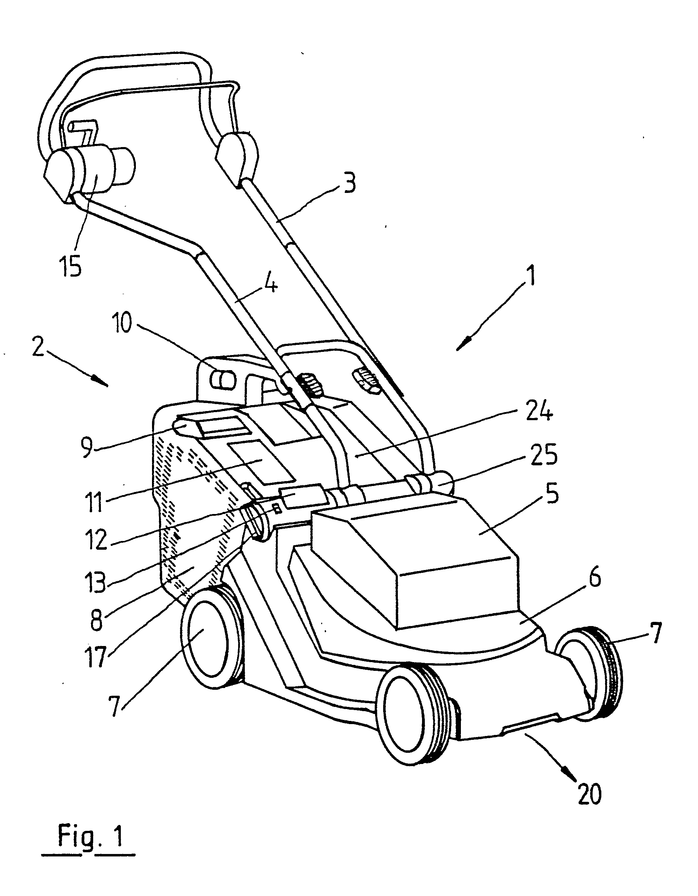

Fig. 1: einen Rasenmäher in perspektivischer Ansicht

Fig. 2 und 3: eine Frontansicht und eine Draufsicht des Rasenmähers von Fig. 1

Fig. 4: eine Draufsicht auf das Mähwerkzeug und die Grasfangbox und

Fig. 5 und 6: einen Querschnitt durch das Mähergehäuse gemäß Schnittlinie V-V von Fig. 4 in einer Übersichts- und einer teilweise abgebrochenen Detaildarstellung.

In den Zeichnungen ist ein Rasenmäher (1) mit unterschiedlichen Start-, Einstell- und Anbauvorrichtungen dargestellt, der von einem Verbrennungsmotor (5) angetrieben wird. Im Rahmen von Baureihen kann der gezeigte Rasenmäher (1) abgewandelt werden, indem einzelne der vorgenannten Vorrichtungen weggelassen oder anders kombiniert werden. Statt einem Verbrennungsmotor kann auch ein Elektromotor Verwendung finden.

Der gezeigte Rasenmäher (1) besitzt einen Hand-, Fuß- und Elektrostarter, eine ansetzbare Grasfangbox (8), eine zentrale Rad- oder Schnitthöhenverstellung, einen verstellbaren Führungsholm (3) und eine Rotationsanzeige (16) für die Messerwelle. Die Bedienungselemente, d.h. die Griffe, Pedale und/oder Anzeigen der vorgenannten Vorrichtungen sind allesamt auf der in Fahrtrichtung (20) rechten Seite des Rasenmähers (1) angeordnet.

In der nachfolgenden Beschreibung beziehen sich alle Seitenangaben links / rechts auf die Fahrtrichtung (20).

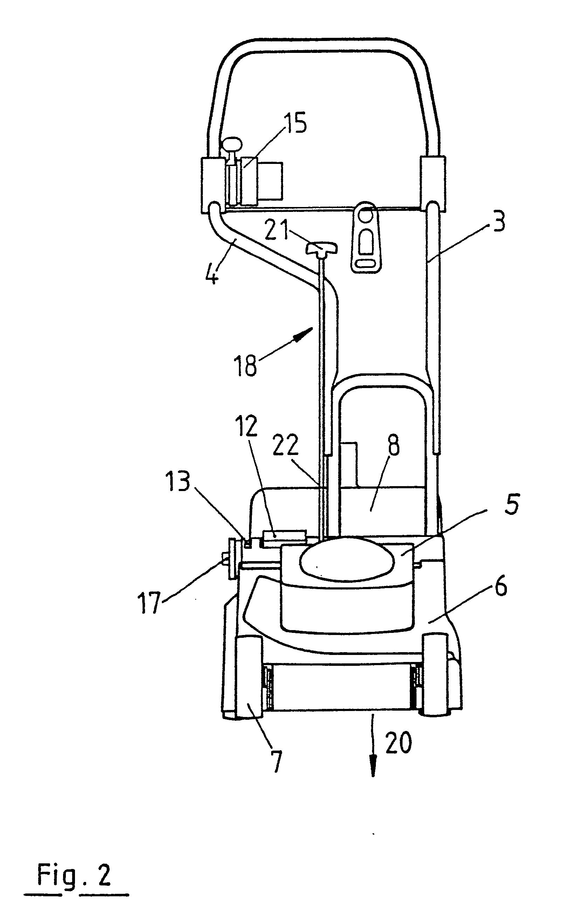

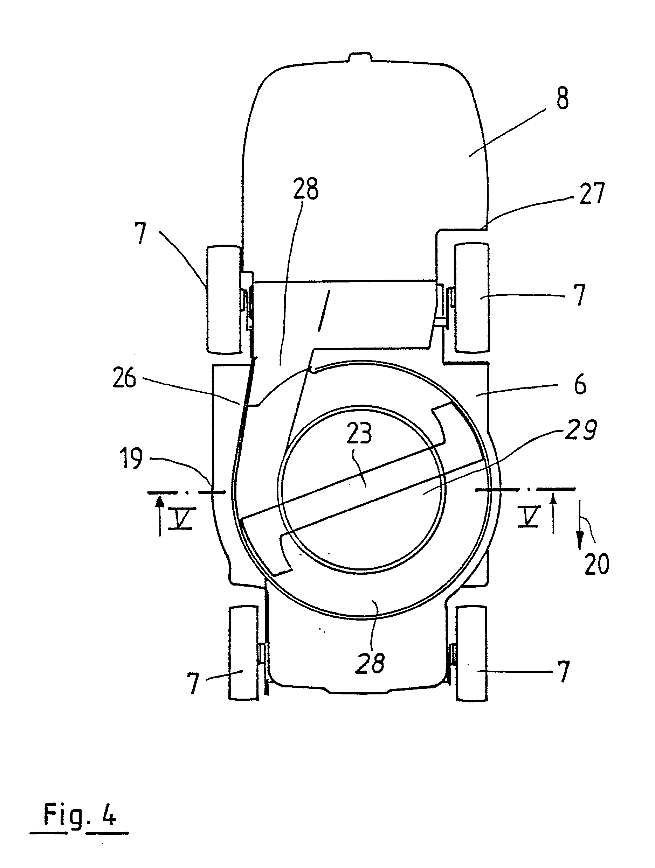

Wie Fig. 2 und 4 verdeutlichen, ist das Mähwerkzeug (23) mit seinem Messerbalken und seinem Messergehäuse (29) gegenüber dem Fahrwerk (7) nach links versetzt angeordnet. Desgleichen ist auch die Grasfangbox (8) nach links versetzt und fluchtet in ihrer Längsachse mit der Messerwelle.

Der Führungsholm (3) ist U-förmig gebogen und erstreckt sich oben im Griffbereich über die volle Rasenmäherseite. Sein linker Arm erstreckt sich längs der Außenseite des Mähergehäuses (6), während der rechte Arm (4) kurz hinter dem Griffbereich nach innen abgewinkelt ist und dann wieder parallel zum ersten Arm verläuft. Auf diese Weise entsteht eine Aussparung (18), die den Bereich oberhalb der Bedienelemente (2) am Rasenmähergehäuse (6) freiläßt.

Der Führungsholm (3) besteht im gezeigten Ausführungsbeispiel aus zwei miteinander verschraubten U-Bügeln, kann aber auch einteilig gestaltet sein. Der Führungsholm (3) ist mit seinen beiden Armen (4) in einer gemeinsamen Achse (25) schwenkbar auf der Oberseite des keilförmig ansteigenden Rasenmähergehäuses (6) hinter dem Motor (5) gelagert. Der verjüngte Holmarm (4) mündet dabei ungefähr in der Mitte der beiden Radachsen. Die Holmachse (25) erstreckt sich über die volle Breite des Mähergehäuses (6) und weist am rechten Ende eine Holmverstellschraube (17) auf, mit der der Führungsholm (3) in der gewünschten Schwenklage arretiert werden kann. An den Schwenklagern befinden sich hierzu Zahnscheibenpaarungen, die über die Schraube (17) ein- und ausgerückt werden können.

Der Rasenmäher (1) besitzt einen Elektrostarter, dessen Bedienhebel (15) am rechten Holmarm (4) im Griffbereich oberhalb der Knickstelle angeordnet ist. Bei Verwendung eines Elektromotores ist hier auch die Steckdose angeordnet. Der Bedienhebel (15) dient auch zur Steuerung des Motors (5) und eines motorischen Radantriebes, sofern ein solcher vorhanden ist.

Beim Einsatz eines Verbrennungsmotors (5) beinhaltet der Rasenmäher (1) auch einen Handstarter mit einem Zugkabel (22) und einem Handgriff (21). Das Starterkabel (22) ist von einer Treibspule auf der Oberseite des Motorgehäuses ausgehend entlang des rechten Holmarmes (4) und damit in der Mittellinie des Mähergehäuses (6) bzw. des Fahrwerkes (7) verlegt. Der Startergriff (21) ist in einer Klammer am Holmarm (4) eingehängt. Zum Starten wird das Zugkabel (22) entlang des Holmarmes (4) herausgezogen, wobei die Bedienungsperson hinter dem Führungsholm (3) sowie der Grasfangbox (8) und damit in genügendem Abstand vom Mähwerkzeug (23) steht.

Sofern ein Fußstarter vorgesehen ist, befindet sich das Pedal (14) auf der rechten Seite, im mittleren Bereich des Mähergehäuses (6). Das Pedal (4) kann nach Art eines Kickstarters aus seiner Ruhestellung in Anlage am Mähergehäuse (6) seitlich abgeklappt werden. Zum Anwerfen des Motors (5) drückt die auf der rechten Seite hinter dem Rasenmäher (1) stehende Bedienungsperson auf das Pedal (14). Das Pedal (14) dreht sich dabei um eine horizontal und quer zur Fahrtrichtung (20) verlaufende Achse.

Der Rasenmäher (1) besitzt auch eine zentrale Rad- oder Schnitthöhenverstellung. Deren Stellhebel (12) ist auf der rechten Seite des Mähergehäuses (6) angeordnet und drehbar auf der Holmachse (25) gelagert. Neben dem Stellhebel (12) befindet sich eine Höhenanzeige (13). Der Stellhebel (12) und die Höhenanzeige (13) sind unter der Aussparung (18) erreichbar.

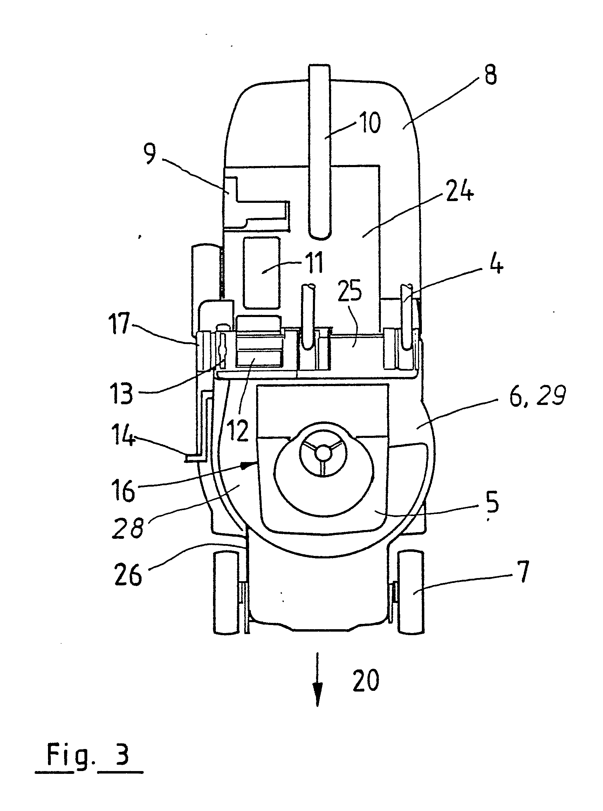

Wie Fig. 3, 4 und 5 verdeutlichen, hat das Mähergehäuse (6) auf der rechten Seite eine vom Mähwerkzeug weiter als auf der linken Seite distanzierte Außenwand (19). Die Gehäusewand (19) ist in der Höhe abgestuft und nimmt in einem Kanal das Zugmittel (26) der Radhöhenverstellung, hier ein Band aus Federstahl, auf.

Wie vorstehend erwähnt, ist das Mähwerkzeug (23) gegenüber dem Fahrwerk (7) und auch dem Mähergehäuse (6) nach links versetzt. Das Mäherkzeug (23) reicht auf dieser Seite mindestens bis auf Höhe der Außenseite der linken Räder (7) oder steht sogar ein Stück vor. Das Mähergehäuse (6) umgibt das Mähwerkzeug (23), d.h. dessen Messergehäuse (29) und weist vor und hinter den Rädern (7) Schutznasen auf. Mit der gezeigten Anordnung des Mähwerkzeuges (23) können Rasenkanten oder sonstige Randbereiche exakt geschnitten werden.

Gemäß Fig. 3 und 4 ist die Grasfangbox (8) gleichachsig mit dem Mittelpunkt des Mähwerkzeuges (23) angeordnet und demgemäß ebenfalls gegenüber dem Fahrwerk (7) und dem Mähergehäuse (6) nach links versetzt. Mit ihrer rechten Seitenwand verläuft sie in Längsrichtung und innerhalb des rechten Hinterrades (7), während die linke Seitenwand unter Bildung eines Radausschnittes (27) abgestuft ist. Die Grasfangbox (8) ist unmittelbar hinter dem Mähwerkzeug (23) angeordnet. Dessen Auswurfkanal (28) verläuft vom rechten Außenpunkt der Messerbahn ausgehend mit einer leichten Neigung schräg nach innen und tritt in die Grasfangbox (8) an deren rechter Seite ein. Die Luft und die mitgeführten Graspartikel treten damit mit einem leichten Innendrall längs der Boxseitenwand ein, was für eine gleichmäßige Füllung sorgt.

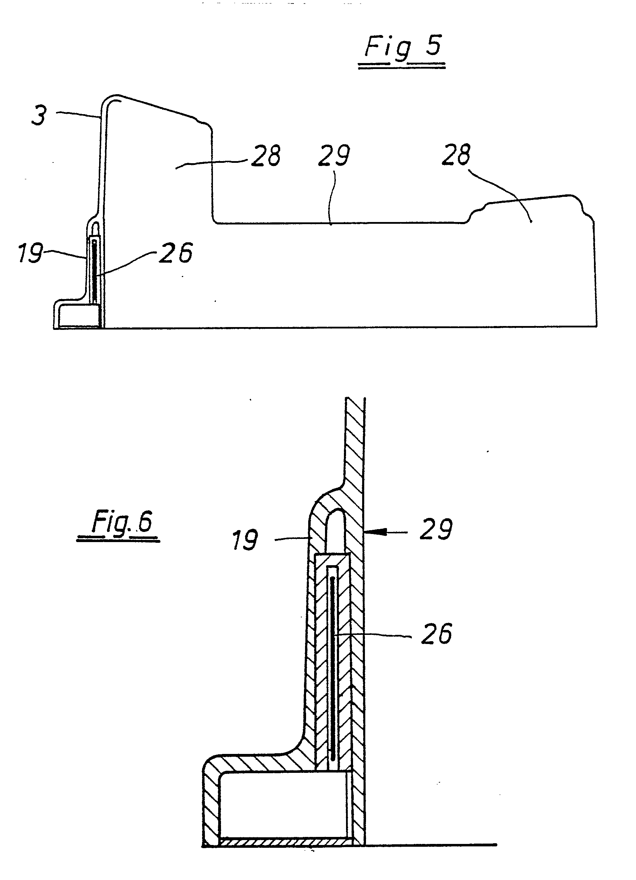

Wie Fig. 4 und 5 verdeutlichen, steigt der Auswurfkanal (28) im Bereich des Messergehäuses (29) von der linken Seite ausgehend schneckenförmig an, so daß die abgeschnittenen Graspartikel nach oben fliegen und knapp unter der Oberseite der Grasfangbox (8) eingeblasen werden. Die Grasfangbox (8) wird dadurch von von oben gefüllt. Das Mähergehäuse (6) erhält auch ingesamt eine nach hinten keilförmig ansteigende Gestalt. Die Holmachse (25) liegt dadurch ergonomisch günstig an der höchsten Stelle des Mähergehäuses (6).

Um die Grasfangbox (8) zu arretieren, besitzt der Rasenmäher (1) eine rückwärtige Mäherklappe (24), die schwenkbar und federnd am Mähergehäuse (6) im Bereich der Holmachse (25) gelagert ist. Am rechten Klappenrand ist ein federnder Sperrhebel (9) zur Arretierung der Grasfangbox (8) vorgesehen. Davor, ebenfalls auf der rechten Seite, ist ein Sichtfenster (11) angeordnet. Bei angesetzter Grasfangbox (8) erstreckt sich die Mäherklappe (24) schräg nach oben und bildet einen Teil der oberen Boxabdeckung. Das Sichtfenster (11) liegt in dieser Stellung über dem Mündungsbereich des Auswurfskanals (28).

Wie Fig. 2 verdeutlicht, befinden sich die Bedienungselemente (9,11) ebenfalls im Bereich des Ausschnittes (18) am Führungsholm (3). Über den mittig und etwa oberhalb des Schwerpunkts der Grasfangbox (8) angeordneten Haltegriff (10) kann die Grasfangbox (8) von einer hinter oder rechts neben dem Rasenmäher (1) stehenden Bedienungsperson abgenommen und angesetzt werden, ohne daß hierfür ein Umgreifen nötig ist. Der Haltegriff (10) und der Sperrhebel (9) sind beide gleichermaßen gut von hinten oder von der rechten Seite zu erreichen.

STÜCKLISTE

1 Rasenmäher
2 Bedienungselemente
3 Führungsholm
4 Holmarm
5 Motor
6 Mähergehäuse
7 Fahrwerk, Rad
8 Grasfangbox
9 Sperrhebel, Boxarretierung
10 Haltegriff
11 Sichtfenster
12 Stellhebel, Radhöhenverstellung
13 Höhenanzeige
14 Fußstarter, Pedal
15 Bedienhebel, Elektrosteuerung
16 Rotationsanzeige
17 Holmverstellschraube
18 Aussparung
19 Gehäusewand
20 Fahrtrichtung
21 Startergriff, Handgriff
22 Starterkabel, Zugkabel
23 Mähwerkzeug
24 Mäherklappe
25 Holmachse
26 Zugmittel
27 Radausschnitt
28 Auswurfkanal
29 Messergehäuse

**Ansprüche**

1.) Rasenmäher mit motorischem Antrieb und einem Führungsholm sowie Start-, Einstell- und Anbauvorrichtungen, dadurch **gekennzeichnet**, daß der Rasenmäher (1) asymetrisch ausgebildet ist, wobei die Bedienungselemente (2) der Start-, Einstell- und Anbauvorrichtungen in Fahrtrichtung (20) gesehen auf der rechten Seite des Rasenmähers (1) angeordnet sind und der Führungsholm (3) auf dieser Seite eine Aussparung (18) aufweist.

2.) Rasenmäher nach Anspruch 1, dadurch **gekennzeichnet**, daß das Mähwerkzeug (23) gegenüber dem Fahrwerk des Rasenmähers (1) in Fahrtrichtung (20) nach links versetzt ist und mindestens bis auf Höhe der Außenkante des linken Vorderrades (7) reicht.

3.) Rasenmäher nach Anspruch 1, dadurch **gekennzeichnet**, daß der Führungsholm (3) U-förmig ausgebildet ist und an den Holmenden auf der in Fahrtrichtung (20) rechten Seite verjüngt ist.

4.) Rasenmäher nach Anspruch 1 oder 2, dadurch **gekennzeichnet**, daß der Verriegelungsgriff (9) und das Sichtfenster (11) der Grasfangbox (8) am rechten Rand der Mäherklappe (24) angeordnet sind.

5.) Rasenmäher nach Anspruch 1 oder 2, dadurch **gekennzeichnet**, daß die Grasfangbox (8) hinter dem Mähwerkzeug (23) ebenfalls nach links versetzt angeordnet ist und im Bereich des in Fahrtrichtung (20) linken Hinterrades (7) einen Radausschnitt (27) aufweist.

6.) Rasenmäher nach Anspruch 1 oder 3, dadurch **gekennzeichnet**, daß der Führungsholm (3) mit seinen Enden auf einer Achse (25) am Mähergehäuse (6) schwenkbar gelagert ist, wobei auf der in Fahrtrichtung (20) rechten Seite der Achse (25) eine Holmverstellschraube (17) angeordnet ist.

7.) Rasenmäher nach Anspruch 1 oder 6, dadurch **gekennzeichnet**, daß der Rasenmäher (1) eine zentrale Radhöhenverstellung aufweist, deren Stellhebel (12) mit einer Höhenanzeige (13) an der in Fahrtrichtung (20) rechten Seite des Mähergehäuses (6) angeordnet und auf der Holmachse (25) schwenkbar gelagert ist.

8.) Rasenmäher nach Anspruch 1 oder 3, dadurch **gekennzeichnet**, daß der Rasenmäher (1) einen Handstarter aufweist, dessen Zugkabel (22) entlang des verjüngten Holmarmes (4) verlegt ist und mit dem Handgriff (21) in einer Klammer am Holmarm (4) eingehängt ist.

9.) Rasenmäher nach Anspruch 1, dadurch **gekennzeichnet**, daß der Rasenmäher (1) einen Fußstarter aufweist, dessen Pedal (14) an der in Fahrtrichtung (20) rechten Seite des Mähergehäuses (6) abklappbar und schwenkbar gelagert ist.

10.) Rasenmäher nach Anspruch 1, dadurch **gekennzeichnet**, daß der Motor (5) eine Rotationsanzeige (16) für die Messerwelle aufweist, die an der in Fahrtrichtung (20) rechten Außenseite des Motorgehäuses angeordnet ist.

11.) Rasenmäher nach Anspruch 2, dadurch **gekennzeichnet**, daß das Mähergehäuse (6) auf der in Fahrtrichtung (20) rechten Seite eine vom Mähwerkzeug (23) distanzierte Außenwand (19) aufweist.

12.) Rasenmäher nach Anspruch 12, dadurch **gekennzeichnet**, daß zwischen der Gehäusewand (19) und dem Mähwerkzeug (23) das Zugmittel (26) der Radhöhenverstellung verlegt ist.

Fig. 2

Fig. 3

Fig. 4

Fig 5

Fig.6

## EINSCHLÄGIGE DOKUMENTE

EP 89115348.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl. X) 5 |
|---|---|---|---|
| Y | GB - A - 1 448 945 (HUSQVARNA) <br> * Fig. 2 * | 1 | A 01 D 34/10 |
| A | * Fig. 2 * | 2 | |
| Y | AT - B - 360 789 (WOLF-GERÄTE GMBH) <br> * Seite 2, Zeilen 52ff; Fig. 1,2 * | 1 | |
| A | * Seite 3, Zeilen 5ff; Fig. 1,2 * | 7 | |
| A | DE - B - 1 507 254 (JACOBSEN MANUFACTURING COMPANY) <br> * Fig. 1,2 * | 3 | |
| Y | * Fig. 1 * | 6 | |
| Y | DE - B2 - 2 648 349 (CONCORD MECCANICA RE. GI S. R.L.) <br> * Fig. 1 * | 6 | RECHERCHIERTE SACHGEBIETE (Int. Cl. X) 5 |
| Y | CH - A - 346 383 (JACOBSEN MANUFACTURING COMPANY) <br> * Seite 1, Zeilen 67ff; Fig. 2 * | 5 | A 01 D 53/00 <br> A 01 D 34/00 |
| Y | DE - A1 - 3 207 835 (WOLF-GERÄTE GMBH) <br> * Fig. 1,2 * | 5 | |
| A | DE - A1 - 3 542 276 (HONDA GIKEN KOGYO K.K.) <br> * Seite 7, Zeilen 14ff; Fig. 1 * | 8 | |

Der vorliegende Recherchenbericht wurde für alle Patentansprüche erstellt.

| Recherchenort <br> WIEN | Abschlußdatum der Recherche <br> 02-11-1989 | Prüfer <br> SCHNEEMANN |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82